Europäisches Patentamt

European Patent Office

Office européen des brevets

(19)

(11) Publication number: 0 071 113
A1

# (12) EUROPEAN PATENT APPLICATION

(21) Application number: 82106420.1

(22) Date of filing: 16.07.82

(51) Int. Cl.³: **B 60 G 7/02**
**B 60 G 11/60**

(30) Priority: 31.07.81 IT 2327581

(43) Date of publication of application:
09.02.83 Bulletin 83/6

(84) Designated Contracting States:
DE FR GB

(71) Applicant: INDUSTRIE PIRELLI S.p.A.
Piazzale Cadorna 5
I-20123 Milan(IT)

(72) Inventor: Tangorra, Giorgio
Via Ramazzotti 12
Monza Milan(IT)

(74) Representative: Dr. E. Wiegand Dipl.-Ing. W. Niemann
Dr. M. Kohler Dipl.-Ing. C. Gernhardt Dipl.-Ing. J. Glaeser
Patentanwälte
Herzog-Wilhelm-Strasse 16
D-8000 München 2(DE)

(54) Suspension for vehicle wheels.

(57) The invention describes an elastic suspension (1) for vehicle wheels, the elastic element (9) of the suspension being arranged around the oscillating arm (6) of the suspension itself. The rotatory oscillations of said arm are converted into compression stresses of said elastic element (9) by means of a flexible and inextensible element (10 or 28 or 31) having its own extremities bound to the elastic element and crossing a diametral aperture (11 or 29) present on said arm (6) so as to wind on the latter when it oscillates.

Fig. 2

EP 0 071 113 A1

# SUSPENSION FOR VEHICLE WHEELS

## Specification

The present invention refers to a suspension for vehicle wheels and particularly to an elastic suspension for vehicle wheels.

Known are suspensions for vehicle wheels comprising a shaped bar having a first extremity connected to the vehicle chassis while the opposite extremity has a hub to which the wheel itself is connected.

Said bars, also known as torsion bars, are provided with a double throw at the extremity provided with the hub so that vertical oscillations of the wheel are converted into rotatory oscillations of said first extremity. Said first extremity is in fact connected to the chassis in such a manner that it cannot rotate and therefore, by sufficiently elongating the portion of said bar comprised between the connection to the chassis and the first throw, the torsional elasticity of the bar material will provide the elastic return for the suspension itself.

A drawback of this kind of known suspension is just due to its size which consequently requires a long space in the vehicle.

Another drawback is that said bars have no damping action and therefore they must always be coupled with dampers of various kinds thus requiring further greater dimensions in the vehicle.

A further drawback is that the elastic characteristic of said kind of suspension is substantially fixed and thus there are difficulties when needing different elastic characteristics for the suspension itself for certain applications.

One aim of the present invention is that of providing a suspension for vehicle wheels being not bulky and having reduced weight and having an elastic characteristic of any whatsoever kind, supporting a high number of cycles so as not to present problems as concerns the useful life and being very soft and comfortable.

One object of the present invention is a suspension for vehicle wheels comprising a rigid element having at a first extremity a wheel and having a second extremity connected with the chassis of the vehicle and associated to at least an elastic element, characterized in that it comprises means for converting the rotatory oscillations of said second extremity of the rigid element into translating motion of at least one side of said elastic element.

The present invention will be better understood by the following detailed description given by way of non-limiting examples with reference to the figures of the enclosed drawing sheets wherein:

Figure 1 shows a suspension according to the present invention applied to a vehicle chassis;

Figure 2 shows in perspective and section view an elastic element of a suspension according to the present invention;

Figure 3 shows in perspective view a different embodiment of a suspension according to the present invention;

Figure 4 and 5 show two different embodiments along line IV-IV of figure 3.

In a more general solution of a suspension for vehicle wheels according to the present invention said suspension comprises a rigid element having one of its extremities connected to the chassis and the opposite extremity connected to a wheel, an elastic element and means for converting the rotatory oscillations of one extremity of the rigid element into reciprocal translating motions of opposite surfaces of said elastic element.

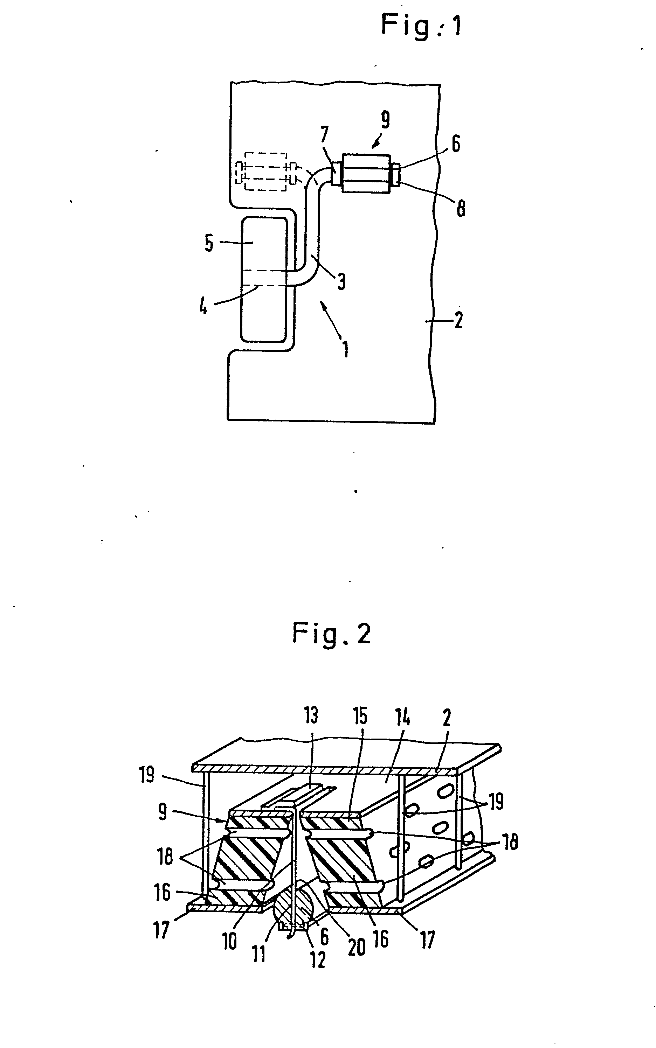

Figure 1 shows a suspension 1 for vehicle wheels connected to the lower side of a vehicle chassis 2, for example of a car. Said suspension 1 comprises a rigid element 3, having substantially S-shape and being provided with a first extremity or arm 4 (indicated by dashes) which is associated to a vehicle wheel 5. A second extremity or arm 6 of said rigid element 3, substantially parallel to said first arm 4, is connected to the chassis 2 for example by two supports 7 and 8 (such as for example bearings or rubber bushes) which allow oscillations of arm 6 around its own axis.

An elastic element 9 of elastomeric material, of elastomeric material provided with cells or of metallic material, is associated to said second arm 6 of the rigid element 3 by means able to convert rotatory oscillations of said second arm 6 into translating motion of at least one side of said elastic element 9 with respect to the opposite side thereof.

According to a particular embodiment of a suspension according to the present invention, said rigid element 3 has a C-shape configuration und therefore the elastic element 3 is adjacent to the wheel 5 (as indicated by dashes in figure 1). In another embodiment the arms of said rigid element connected to the chassis are two, positioned along a straight line so as to be able to associate to said suspension two elastic elements parallely operating. In this last case the rigid element is therefore T-shaped in correspondence with its arm 6 connected to the chassis 2 and comprises two elastic elements (one of which is dashed) which are shown in figure 1.

A particular embodiment of said means for converting the rotatory oscillations of said second arm 6 of the rigid element 3 into a translating motion inside the elastic element 9 is shown in figure 2.

Said figure 2 shows a flexible and inextensible element 10, such as for example a metallic or elastomeric strip embedding a traction resistant insert, said element 10 at one of its extremities is connected to arm 6 of the rigid element 3 for example by inserting said extremity into a slot 11 of said arm 6 and by successively closing said slot 11 by means of proper screws 12. The opposite extremity of said element 10 is connected to a rigid plate 14 present on the elastic element 9 at its basis 15 which is farthest away with respect to said arm 6, for example by means of a terminal 13 pressed against said extremity of the element 10 by means of proper screws (not shown).

One or more elements 10 can be provided.

Said elastic element 9 comprises (connected for example to said rigid plate 14 by a rubber/metal bond) two blocks 16 of hollow elastomeric material or of suitable expanded material provided with micro-cavities.

Each of said blocks 16 is moreover at its nearest side with respect to arm 6 of the rigid element 3, connected to a rigid plate 17 for example of metal. The cavities of the passing bores 18 of said blocks 16 are obtained during vulcanization and pressing of said blocks.

To said plate 17 are moreover connected suitable means known per se for connecting the elastic element 9 to the vehicle chassis 2 such as for example tension rods 19.

In order to allow an effective fixing of the flexible and inextensible element 10 on said arm 6 of the rigid element 3, slot 11 in which an extremity of the flexible and inextensible element 10 is inserted and which crosses said arm 6 diametrically is provided with properly shaped walls 20.

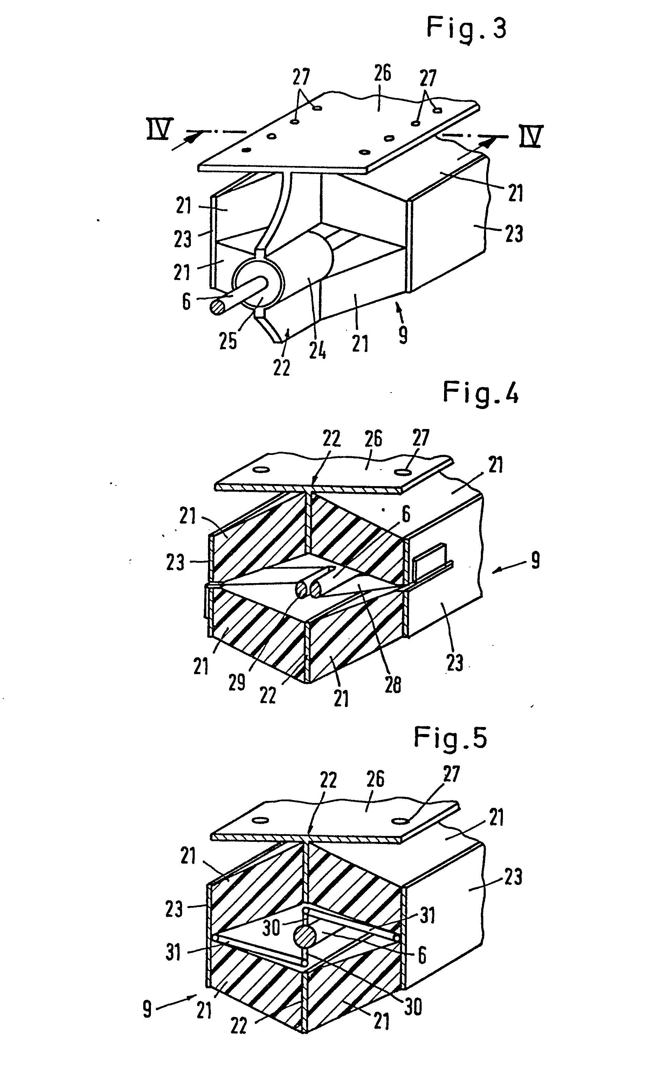

Figure 3 shows in perspective view a different embodiment of a suspension for vehicle wheels according to the present invention.

Said suspension foresees that the elastic element 9 is arranged around the arm 6 of the rigid element 3 so as to be able to largely reduce the dimensions of the suspension itself.

In fact element 9 shown in said figure 3 comprises four blocks 21 for example of elastomeric material having their own extremeties adjacent to arm 6 bound by a rubber/metal bond on the opposite faces of a rigid frame 22.

The extremities of said blocks 21 farthest from arm 6 are on the contrary connected in couple to two rigid plates 23 again by a rubber/metal bond. The rigid frame 22 is provided with two seats 24 (only one can be seen) in form of bushes which act as a support for arm 6 itself.

Preferably bodies 25 of elastomeric material are interposed between arm 6 and the inside of seat 24. Said bodies 25 can be bound to said arm 6 and to the inside of seat 24 for example by a rubber/metal bond or can be compressed in the space existing between the inside of said seat 24 and the arm 6 itself. The function of said bodies 25 of elastomeric material is, other than that of preventing the vibrations from spreading between the arm 6 and the vehicle chassis also that of providing a moderate damping action for the rotatory oscillations of said arm 6.

Moreover, to one of said seats 24 a circular friction member (not shown in the figures) can be associated which can further increase the damping capacity of the elastomeric material itself. Said frame 22 is moreover provided with a bearing plate 26 by which the seats 24 for arm 6 and elastic element 9 are connected to the vehicle chassis (not shown in figure) for example by screws or bolts insertable into bores 27 present on said plate 26.

Figures 4 and 5 each show a section IV-IV of figure 3 and each of these figures shows a different embodiment of the means for converting the rotatory oscillations of said arm 6 of the rigid element into translating motion of both sides of the elastic element 9.

In figure 4 in particular said means are at least a flexible and inextensible element 28, such as for example one or more ropes or a strip of flexible and inextensible material, having each own extremity bound to one of the rigid plates 23 for example by means of a terminal (not shown). Said flexible and inextensible element 28 crosses a shaped slot 29 present on arm 6 so as to wind on said arm 6 when it oscillates around its own axis.

The elastic element 9, and in particular the blocks 21 are already shown in a partially loaded state in said figure 4 since the flexible and inextensible element 28 is not arranged according to a straight line between the plates 23 but is partly wound on said arm 6, said arm 6 being subjected to a partial loading rotation of about 90°.

In figure 5 said means for converting the rotatory oscillations of arm 6 into translating motion of the sides of the elastic element 9 comprise two rigid lugs 30 projecting from arm 6 of the rigid element. Said lugs 30 are preferably arranged along the extension of a diameter of arm 6 itself and opposite to the axis of the same.

To the free extremity of each lug 30 a rigid bar 31 or if necessary an inextensible element is hinged, said bar 31 is then connected to rigid plate 23 rigidly or preferably through a hinge according to the dimensions of elastic element 9, and more particularly of blocks 21. More pairs of rigid lugs 30 can connect arm 6 to the rigid plates 23 of said elastic element 9.

The operation of a vehicle suspension according to the present invention is the following with reference to figures 1 and 2.

A vertical movement of wheel 5 causes a vertical movement of arm 4 of rigid element 3 but, being said rigid element 3 connected to the vehicle chassis 2 through its other arm 6, the vertical movement of arm 4 translates into a partial rotation of arm 6, i.e. into an oscillation of said arm 6 around its own axis.

Being the flexible and inextensible elements 10 inserted into slots 11 of said arm 6, the oscillations of said arm 6 around its own axis make said elements 10 act against the shaped walls 20 of said slots 11 and therefore the free section of elements 10 between arm 6 and rigid plate 14 decreases thus making extremity 15 of the elastic element 9 approach the arm 6, compressing the elastomeric material forming the element 9 itself.

A suspension for vehicle wheels according to the present invention reaches predetermined aims. The suspensions according to the present invention comprise in fact a very light structure and have limited dimensions since they need no torsion bars extending all over the vehicle.

Furthermore, a technician of the field can determine the shape of the elastic element and if necessary also the kind of elastomeric compound, which can be hollow or not, for providing to the suspensions a more suitable characteristic to every particular application, i.e. for cars, for light-transport vehicles and so on.

Moreover, the elastic characteristic of the suspension can also vary by properly modifying the curvature of the shaped slot crossing the arm connected to the frame of the rigid element. The flexible and inextensible element crossing said slot can in fact wind on the arm itself for a greater length, being its rotatory oscillation the same, by suitably shaping said slot.

Furthermore, in particular applications the shaping of said bore or slot can have an ovoid section, or anyway be not circular in order to give, for any vertical position of the wheel, a different arm to the elastic reaction of the elastic element with consequent variation of the load-deformation curve.

The suspensions according to the present invention allow to reach softnesses comparable to that of air springs. The elastic element of a suspension according to the present invention can be in fact preloaded by making the rigid element connected to the wheel describe very forced rotations, for example up to 90° or more, before reaching the static preloading phase corresponding to the usual trim of the vehicle. In such conditions, the elastic element being strongly preloaded, the suspension according to the present invention will have a very low rigidity and therefore the little oscillations due to road roughness will be very well absorbed thus giving the vehicle a particularly soft suspension which can be obtained only with pneumatic suspensions.

The suspensions according to the present invention allow moreover to provide a damping action thanks to the viscosity of the elastomeric material forming said elastic elements. This is also evident in the solution wherein the arm itself of the rigid element is supported by elastomeric bushes associated to circular friction members. By the last solution for some particular applications, the suspensions according to the present invention act as dampers and therefore the use of dampers of classic type, which on the contrary are always used with torsion bars, are made useless by the above mentioned suspensions.

Furthermore, the suspensions according to the present invention have a long lasting useful life since the elastic element, associated to them, is subjected to generally compressive or combined compressive and bending stresses, stresses which, as already known, are well supported by the elastomeric material forming said elements.

Finally the suspensions according to the present invention are very compact since they allow to arrange around the arm of the rigid element (connected to the vehicle chassis) to which the wheel itself is connected, both parts of said elastic element arranging them on the opposite sides with respect to said arm and subjecting them to the same substantially compressive stress.

Even if different embodiments of a vehicle suspension according to the invention have been illustrated and described, there have to be intended as comprised within their ambit all the possible variations accessible to a technician of the field.

WHAT IS CLAIMED IS:

1. Suspension for vehicle wheels (5) comprising a rigid element (3) having at its first extremity a wheel (5) and having a second extremity connected to the chassis (2) of the vehicle and being associated to at least an elastic element (9),characterized in that it comprises means for converting the rotatory oscillations of said second extremity (6) of the rigid element (3) into translating motion of at least a side of said elastic element (9).

2. Suspension according to claim 1,characterized in that said means comprise at least one flexible and inextensible element (10 or 28 or 31) bound to a side of said elastic element (9) and windable on said second extremity (6) of the rigid element (3).

3. Suspension according to claim 2,characterized in that said flexible and inextensible element (10 or 28 or 31) is bound to the side of said elastic element (9) that is farthest with respect to the second extremity (6) of the rigid element (3) on which it winds.

4. Suspension according to claim 3,characterized in that said elastic element (9) is provided with a cavity wherein the second extremity (6) of said rigid element (3) is inserted.

5. Suspension according to claim 1,characterized in that said means comprise at least a rigid projection (30) cantilevered from said second extremity (6) of the rigid element (3) and an inextensible element (31) connecting said projection to a side of said elastic element (9).

Fig. 1

Fig. 2

0071113

Fig.3

Fig.4

Fig.5

.0071113

Application number

EUROPEAN SEARCH REPORT

EP 82 10 6420

## DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| | --- | | B 60 G 7/02 |
| X | FR-A-1 523 661 (L.E.LECLERC) *The whole document* | 1,2,4 | B 60 G 11/60 |
| | --- | | |
| X | FR-A-2 079 449 (PEUGEOT, RENAULT) *Page 2, lines 22-34; figure 2* | 1,2 | |
| | ----- | | |

TECHNICAL FIELDS SEARCHED (Int. Cl. 3)

B 60 G
F 16 F

The present search report has been drawn up for all claims

| Place of search | Date of completion of the search | Examiner |
|---|---|---|
| THE HAGUE | 08-11-1982 | CINQUANTINI B. |